# EUROPÄISCHE PATENTSCHRIFT

(11) **EP 3 246 809 B1**
(45) Veröffentlichungstag und Bekanntmachung des Hinweises auf die Patenterteilung: **23.12.2020**
(21) Anmeldenummer: 17166997.1
(22) Anmeldetag: 19.04.2017
(51) Int. Cl.: G06F 3/0488, G06F 3/038

(54) **GESTENEINGABEVERFAHREN**
GESTURE INPUT METHOD
MÉTHODE D'ENTRÉE DE DONNÉES PAR GESTES

(30) Priorität: 18.05.2016 DE 102016208496
(43) Veröffentlichungstag der Anmeldung: 22.11.2017
(73) Patentinhaber: Heidelberger Druckmaschinen AG, 69115 Heidelberg (DE)
(72) Erfinder: Buckenmaier, Matthias, 69469 Weinheim (DE); König, Edelbert, 76709 Kronau (DE); Scheurer, Achim, 76756 Bellheim (DE)

(56) Entgegenhaltungen:
- US-A- 5 880 717
- US-A1- 2013 249 806

## Beschreibung

Die Erfindung betrifft ein Verfahren zur Erweiterung des Funktionsumfangs der mit einem relativ positionierenden Eingabegerät realisierbaren Gesten zur Bedienung einer Maschine.

Die Erfindung liegt im technischen Gebiet der elektronischen Benutzerschnittstellen.

Zur Bedienung von Maschinen durch den menschlichen Anwender sind seit geraumer Zeit verschiedenste Arten elektronischer Benutzerschnittstellen bekannt. Diese können zum Beispiel durch an die Maschine angeschlossene Steuerungsrechner, realisiert sein, also in Form von dessen Eingabeelementen wie Maus und Tastatur. Oft ist auch der Steuerungsrechner in die Maschine selbst als Steuerungselement integriert. In diesem Fall sind auch die Eingabeelemente des Steuerungsrechners in die Maschine als Steuerungselement integriert und somit ein Teil der zu steuernden Maschine. Ein in diesem Fall häufig verwendetes Eingabeelement ist zum Beispiel ein sogenanntes Touchpad, wie es auch bei handelsüblichen Notebooks weit verbreitet ist. Diese standardmäßigen Touchpads bilden eine Mauszeiger-Bewegung ab, in dem sie die relative Bewegung eines Fingers, der über die Oberfläche des Touchpads gleitet, erfassen. Sie bilden damit auf einem angeschlossenen Anzeigebildschirm relative Bewegungen eines Mauszeigers ab, analog zu den Bewegungen einer angeschlossenen Maus. Die Verwendung eines solchen Touchpads am integrierten Steuerstand einer Maschine hat dabei gegenüber der Verwendung einer handelsüblichen Maus den Vorteil, dass es sich wesentlich leichter in den Steuerstand der Maschine integrieren lässt. Dies ist insbesondere in einer Industrieumgebung, in der viele zu steuernde Maschinen arbeiten, bezüglich der Anforderungen an die verwendeten Rechner hinsichtlich Staubfreiheit, Wasserschutz und Ähnliches (sh. IP-Code) notwendig.

In neuerer Zeit wird als erweitertes Bedienkonzept häufig eine sogenannte Multitouch-Bedienung verwendet. Die dazu benötigte multitouchfähige Bedienfläche ist in der Lage, gleichzeitig mehrere Berührungen, zumeist mit den Fingern, zu erkennen, womit deutlich mehr Bedienmethoden zum Einsatz kommen können, als bei einem Singletouch-Touchpad, welches in vielen Fällen nur einen einzigen Berührungspunkt gleichzeitig erfassen kann. Mit solchen Multitouch-Bedienflächen lassen sich daher detaillierte Gestensteuerungen umsetzen. Dafür werden in die entsprechenden zu steuernden Maschinen als integrierte Bedienelemente dann solche Multitouch-Bedienflächen eingesetzt.

Es ergibt sich dabei jedoch das Problem, dass besonders in älteren Maschinen, die lediglich über ein Singletouch-Touchpad verfügen, eine solche Gestensteuerung per Multitouch nicht umgesetzt werden kann. Natürlich wäre es möglich, die Benutzerschnittstelle auszutauschen und das Singletouch-Touchpad durch ein Multitouch-Touchpad zu ersetzen. Dies ist jedoch oft mit hohen Kosten und hohem Aufwand verbunden, bzw. überhaupt nicht möglich, da die Benutzerschnittstellen oft sehr stark in die zu steuernde Maschine integriert sind. Es wäre also von enormem Vorteil, eine Möglichkeit zu finden, die verwendeten Singletouch-Touchpads so einzusetzen, dass damit dennoch eine Gestensteuerung mittels Multitouch-Bedienung möglich ist.

Aus dem Stand der Technik ist dazu aus der US-Patentanmeldung US 2010 0139990 A1 ein Multitouch-Touch-Panel bekannt, welches einen Multitouch-User-Input durch eine Kombination von Drücken und Berühren des Panels mit dem Finger erkennt. Das erfindungsgemäße Touchpad ist darüber hinaus in der Lage, bestimmte Eingaben auf dem Panel zu ignorieren, zurückzuweisen oder entsprechend einer vermuteten Intention des Bedieners zu modifizieren. Die offenbarte Erfindung betrifft jedoch als eigentlichen Kern der Erfindung ein neuartiges Touchpad, welches ähnlich zu den Multitouch-Screens multitouch-fähig ist. Es müsste also ebenfalls an der Benutzerschnittstelle der Maschine ein neues Bedienelement eingebaut werden. Eine Verwendung des alten, lediglich Singletouch-fähigen Touchpads, ist mit dieser Erfindung nicht möglich.

Zudem ist aus dem US-Patent US 5,880,717 ein Touchpad und ein Verfahren zur Bedienung desselben bekannt, welches absolute Koordinaten erfasst, aus diesen zudem Bewegungen des Cursors in Form relativer Koordinaten berechnet und dabei in der Lage ist, trotz der eingeschränkten Fläche des Touchpads, fortgeführte Bewegungen des Cursors zu erzeugen. Dies geschieht durch eine Unterteilung der Touchpad-Fläche in eine Arbeitszone und eine Randzone. Wird eine Bewegung in die Randzone erfasst, so interpretiert die Steuerung dies als fortgesetzte Bewegung in der bisher erfassten Richtung und Geschwindigkeit. Es können auch bestimmte spezielle Bewegungen in eine festgelegte Richtung hinterlegt werden, deren Aktivierung von der Art der Randüberschreitung abhängt.

Aus dem US-Patent 9,218,064 B1 ist des Weiteren ein Verfahren bekannt, mit dem auf einem Multitouch-Screen verschiedene Multi-Finger-Gesten auf Kommando eingelernt werden können, welche dann im Einsatz durch den Anwender vom System wieder erkannt werden und als Geste zur Gestensteuerung verwendet werden können. Jedoch sind die Multitouch-Gesten nur dann vom System erlernbar und erkennbar, wenn sie auch über eine Multitouch-fähige Hardware, wie dem Multitouch-Screen, dem System zur Verfügung gestellt werden. Auch mit diesem System und Verfahren ist also keine Erkennung von Multitouch-Gesten über ein lediglich Singletouch-fähiges Eingabegerät möglich.

Aus der US-Patentanmeldung 2014 0282178 A1 ist ein System bekannt, welches anhand von auf einem Touchscreen eingegebenen Nutzer-Input Gesten erkennt, welche in einem Speicher des Systems abgelegt sind. Bei dem hier offenbarten System handelt es sich also um eine Gestenerkennung bereits personalisierter Gesten durch Interpretation einer Anwendereingabe über ein Touch-Screen, ein Touchpad oder eine Maus, ein Keyboard, eine Videokamera oder ein Mikrofon. In diesem System können auch einfache Gesten von Eingabegeräten wie zum Beispiel einer Maus, die lediglich Singletouch-fähig sind, zur Gestenerkennung verwendet werden. Die erzeugten personalisierten Gesten müssen jedoch vorher vom Anwender mittels einer speziellen Eingabe im System eingelernt werden. Das System nutzt die so gelernten Kommandos und Gesten dann, um für einen aktiven Benutzer, der bestimmte Handlungen an der Benutzeroberfläche vornimmt, anhand seiner Benutzereingaben bestimmte Kommandos vorherzusagen bzw. zu erkennen, und diese dann umzusetzen. Eine klassische Gesteninterpretation mit Multitouch-Erkennung über ein lediglich Singletouch-fähiges Eingabeelement ist jedoch mit diesem offenbarten System und diesem Verfahren ebenfalls nicht möglich.

Es ist daher Aufgabe der vorliegenden Erfindung, ein Verfahren zu offenbaren, mit welchem eine Gestenerzeugung zur Steuerung einer Maschine möglich ist, die einer Multitouch-Gestensteuerung über einen Multitouch-Screen möglichst nahe kommt.

Die erfindungsgemäße Lösung dieser Aufgabe stellt ein Verfahren zur Erzeugung von Gesten für die Bedienung einer Maschine durch einen Rechner gemäß Anspruch 1 dar.

Der Schlüssel zur Erweiterung der Menge der Gesten ist es, absolute Bedienkoordinaten auf dem Eingabefeld, in diesem Feld also dem Touchpad, zu erhalten. Bei einem Multitouch-Screen ist die Hardware selbst bereits dazu in der Lage, eine Berührung des Anwenders auf dem Multitouch-Screen einem bestimmten absoluten Ort auf dem Touchscreen zuzuordnen. Bei einem Singletouch-fähigen Touchpad können relative Bedienkoordinaten erfasst werden. Fährt zum Beispiel ein Anwender mit dem Finger über ein Touchpad nach links, so bewegt sich der Mauszeiger auf dem Anzeigeelement ebenfalls nach links und nicht, wie bei einem Multitouch-Screen, zum absoluten Ort auf dem Anzeigebildschirm, der dem entsprechenden absoluten Ort auf dem Touchpad, den der Anwender mit dem Finger berührt hat, entspricht. Im erfindungsgemäßen Verfahren werden nun nicht nur die relativen Bedienkoordinaten, die das Touchpad liefert, erfasst, sondern es werden auch absolute Bedienkoordinaten in einem separaten Eingangskanal von einem proprietären Software-Protokoll, das hier quasi als HW-Treiber für das Eingabeelement arbeitet, erfasst. Aus den absoluten und den relativen Bedienkoordinaten zusammen wird dann von einer Applikation in einer Interpretation und Kombination beider Eingangskanäle eine neue Geste erzeugt, die ohne die Erfassung der absoluten Koordinaten nicht möglich gewesen wäre.

Vorteilhafte und daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass das Eingabemedium berührungssensitiv ist und ein flächenmäßig begrenztes Eingabefeld aufweist. Das Eingabemedium beinhaltet dabei eine berührungsempfindliche Oberfläche, wie zum Beispiel ein Touchpad oder ein Touchscreen. Das Eingabefeld selber muss dabei flächenmäßig begrenzt sein, da andernfalls keine absoluten Bedienkoordinaten erzeugt werden können.

Eine weitere bevorzugte Weiterbildung des erfindungsgemäßen Verfahrens ist dabei, dass die absoluten Bedienkoordinaten auf dem Eingabemedium durch Randüberschreitung auf dem flächenmäßig begrenzten Eingabefeld ermittelt werden. Ein bevorzugter Weg, die absoluten Bedienkoordinaten zu ermitteln, liegt darin, die relative Fingerbewegung über den Rand des Eingabefeldes zu erfassen. Damit ist dann die Erfassung von Wischbewegungen von innen nach außen und von außen nach innen möglich. Diese Information kann vom Softwareprotokoll registriert werden, womit sich in einer Interpretation dieser Bewegung über den bekannten Rand des Eingabefeldes absolute Bedienkoordinaten ergeben.

Eine weitere bevorzugte Weiterbildung des erfindungsgemäßen Verfahrens ist dabei, dass die relativen Bedienkoordinaten auf dem Eingabemedium durch berührungsindizierte Bewegungen auf dem flächenmäßig begrenzten Eingabefeld ermittelt werden. Die relativen Bedienkoordinaten werden dabei in klassischer Weise, wie es auf einem Touchpad standardmäßig durchgeführt wird, dadurch ermittelt, dass der Anwender mit dem Finger eine Bewegung über das Touchpad ausführt und somit dem Software-Protokoll die relativen Bedienkoordinaten zur Verfügung stellt. Zusammen mit den absoluten Bedienkoordinaten kann eine Applikation dann aus relativen und absoluten Bedienkoordinaten eine neue Geste erzeugen, die ohne die Erfassung der absoluten Koordinaten nicht realisierbar gewesen wäre.

Eine weitere bevorzugte Weiterbildung des erfindungsgemäßen Verfahrens ist dabei, dass die durch die Applikation erzeugten Gesten an eine Software-Applikation zur Umsetzung und Darstellung der erkannten Gesten auf einem Display weitergeleitet werden. Obwohl das erfindungsgemäße Verfahren sich in der Hauptsache mit der Erzeugung von Multitouch-Gesten aus den beiden separaten Eingangskanälen von absoluten und relativen Bedienkoordinaten beschäftigt, so werden die auf diese Art erzeugten Gesten natürlich für eine bestimmte Verwendung benötigt. Die Zuordnung der erzeugten Gesten zu bestimmten Aktionen die auf einem Display angezeigt werden, welches der verwendeten Benutzerschnittstelle zugeordnet ist, erfolgt dabei durch eine auf dem Steuerungsrechner laufende übergeordnete Software-Applikation. Diese ordnet die erkannten bzw. erzeugten Multitouch-Gesten bestimmten Aktionen zu, welche dann auf dem Display der Benutzerschnittstelle angezeigt und umgesetzt werden. So kann zum Beispiel ein Wischen über den linken Rand des begrenzten Eingabefeldes hinaus durch die Software-Applikation dahingehend interpretiert werden, dass das ein geöffnetes Dokument oder eine Einstellungsseite, welche gerade auf dem Display angezeigt werden, nach links um eine Seite weitergeblättert werden. Es kann aber auch eine völlig andere Bedeutung bekommen, wie z.B. das Schließen des Dokumentes.

Eine weitere bevorzugte Weiterbildung des erfindungsgemäßen Verfahrens ist dabei, dass ein Filtermechanismus die relativen und absoluten Bedienkoordinaten in den zwei separaten Eingangskanälen selbst blockiert, so dass nur die erzeugten Gesten an die Software-Applikation zur Ausführung einer Aktion weitergeleitet werden. Damit eine vernünftige Steuerung durch die erzeugten Gesten möglich ist, müssen die aus den relativen und absoluten Bedienkoordinaten ermittelten Daten selbst durch einen Filtermechanismus blockiert werden. So soll die bereits erwähnte beispielhafte Wischgeste nach links weder ein Bewegen des Mauszeigers auf dem Display nach links verursachen, noch ein Springen des Mauszeigers an den linken Bildrand, wie es der eigentlichen Interpretation der relativen und absoluten Bedienkoordinaten entsprechen würde. Nur die erzeugte Geste selbst, bzw. die Umsetzung dieser erzeugten Geste in der Software-Applikation, soll auf dem Display zu erkennen sein.

Eine weitere bevorzugte Weiterbildung des erfindungsgemäßen Verfahrens ist dabei, dass das Eingabemedium, welches die berührungssensitiven Bewegungseingaben des Anwenders in Eingangssignale umwandelt, ein relativ positionierendes Eingabemedium, wie zum Beispiel ein Touchpad, ist. Die bevorzugte Anwendung des erfindungsgemäßen Verfahrens ist dabei die Anwendung auf einem relativ positionierenden Eingabemedium, wie einem entsprechenden Touchpad. Denn mit dem erfindungsgemäßen Verfahren können auch auf einem lediglich relativ positionierenden Eingabemedium, das heißt, einem Medium, das lediglich relative Bedienkoordinaten verarbeiten kann, Gesten mit einem absoluten Koordinatenbezug erzeugt und verwendet werden. Es ist also somit nicht mehr in jedem Fall notwendig, zur Bedienung mittels Gestensteuerung die integrierten relativ positionierenden Eingabemedien, wie zum Beispiel ein Standard-Touchpad, in den integrierten Benutzerschnittstellen der Maschinen z.B. gegen Multitouchscreens auszutauschen.

Eine weitere bevorzugte Weiterbildung des erfindungsgemäßen Verfahrens ist dabei, dass das Eingabemedium, welches die berührungssensitiven Bewegungseingaben des Anwenders in Eingangssignale umwandelt, ein Multitouch-fähiges Eingabemedium, wie zum Beispiel ein Touchscreen, ist. Das erfindungsgemäße Verfahren kann selbstverständlich auch auf einem Eingabemedium verwendet werden, welches bereits Multitouch-fähig ist.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: Ein Beispiel eines Singletouch-fähigen Eingabemediums mit erzeugten relativen Bedienkoordinaten
- Figur 2:: Ein Multitouch-fähiges Eingabemedium mit erzeugten absoluten Bedienkoordinaten
- Figur 3:: Eine schematische Darstellung eines das erfindungsgemäße Verfahren umsetzenden Systems mit absoluten und relativen Bedienkoordinaten

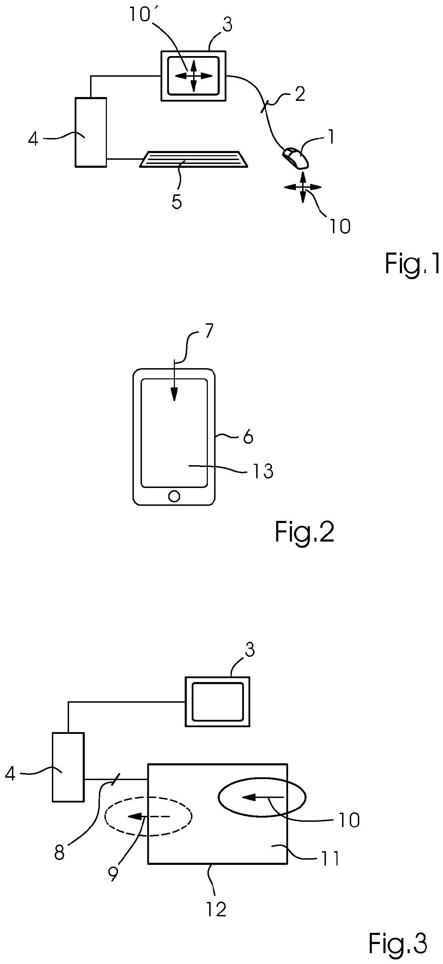

Das bevorzugte Ausführungsbeispiel wird üblicherweise auf einem System zur Steuerung einer Druckmaschine verwendet, welches über eine integrierte Benutzerschnittstelle verfügt. Diese Benutzerschnittstelle beinhaltet ein Touchpad 12, über welches bisher lediglich relative Bedienkoordinaten 10 zur Steuerung der Maschine, ähnlich einer Maus, verwendet werden. In Figur 1 ist dabei ein Beispiel eines Systems dargestellt, in welchem mittels eines Eingabeelementes 1 relative Bedienkoordinaten 10' erzeugt werden können. Zur besseren Darstellung ist das Eingabeelement 1 in Figur 1 in Form einer Maus dargestellt, auch wenn es in bevorzugter Ausführungsvariante selbstverständlich ein Touchpad 12 ist. Mittels des Eingabeelementes 1 können relative Bewegungen, zum Beispiel nach oben/unten, links/rechts, kreisförmig, etc. durchgeführt werden. Diese werden von einem Software-Protokoll, dem Treiber 2, erkannt und an das zugeordnete Display 3 weitergeleitet, wo die Bewegungen 10' dann entsprechend 1:1 in Form eines Mauszeigers angezeigt werden. Mit dieser Steuerung über ein Touchpad 12, bzw. eine Maus, sind also lediglich relative Bewegungen umsetzbar. Die Verknüpfung mit den absoluten Koordinaten 7 auf dem Display ist und bleibt Aufgabe des Anwenders. Dieser muss erkennen, wenn die relative Bewegung des Mauszeigers denselbigen zu einem absoluten Punkt auf dem Display bewegt, auf dem er eine bestimmte Aktion auslösen möchte. Die Information über diese absolute Bedienkoordinate 7 steht dem Treiber 2 selbst nicht zur Verfügung.

Solche absoluten Bedienkoordinaten 7 sind dagegen in einem System, wie es in Figur 2 dargestellt ist, erfassbar. Dabei handelt es sich um einen Multitouch-Screen 13, wie er zum Beispiel auf einem handelsüblichen Smartphone oder einem Tablet 6 verwendet wird. Auf diesem Multitouch-Screen 13 kann der Anwender einen bestimmten Ort auf dem darunterliegenden Display berühren und das verantwortliche Software-Protokoll, also der Treiber, kann die somit erzeugte ortsgebundene Information sofort in Form einer absoluten Bedienkoordinate 7 erkennen und zu einer bestimmten Aktion umwandeln, bzw. diese durchführen und anzeigen. Da die Multitouch-Screens 13 zudem mehrere solcher Inputs gleichzeitig verarbeiten können, ist somit eine Steuerung durch Multifinger-Gesten möglich. So kann zum Beispiel mit mehreren Fingern gleichzeitig der Multitouch-Screen 13 berührt und eine bestimmte Bewegung ausgeführt werden, welche dann zu einer bestimmten Geste umgesetzt wird.

In Figur 3 ist nun ein Beispiel für ein System dargestellt, in welchem das erfindungsgemäße Verfahren entsprechend umgesetzt wird. Das System verfügt über ein relativ positionierendes Eingabemedium 11 analog zu jenem in Figur 1. Auf diesen Touchpad 12 können entsprechend relative Bewegungen 10, zum Beispiel mit dem Finger, durchgeführt werden. Diese ergeben für das auf dem angeschlossenen Steuerungsrechner arbeitende Software-Protokoll 2, also den Treiber, entsprechend relative Bedienkoordinaten 10' für einen von zwei Eingangskanälen für das Software-Protokoll 2. Die zur Gestensteuerung entsprechend notwendigen absoluten Bedienkoordinaten 7 werden im bevorzugten Ausführungsbeispiel dadurch ermittelt, dass der Anwender seine relative Bewegung mit dem Finger über die Grenze der Eingabefläche 11 des Touchpads 12 führt. Das Software-Protokoll 2 erkennt, dass die relative Bewegung an einer bestimmten Stelle an der Grenze des Eingabefeldes 11 diese Grenze überschreitet und erhält anhand dieser bestimmten Stelle eine absolute Bedienkoordinate 9 über den zweiten Eingangskanal. Anhand der Kombination dieser beiden Eingangskanäle, also der relativen Bewegung und der absoluten Ortsinformation an der überschrittenen Grenze des Eingabefeldes 11, kann somit durch die Applikation 14 unter Verwendung des Software-Protokolls 8 eine Geste erzeugt werden. Ohne die Überschreitung des begrenzten Eingabefeldes 11 wäre lediglich die relative Bewegung 10 nach links erkennbar, womit keine solche Geste erzeugt werden könnte, sondern lediglich eine Bewegung nach links angezeigt werden würde. Ein entsprechender Filtermechanismus sorgt dafür, dass bei Erzeugung einer Geste aus den kombinierten Eingangskanälen die einzelnen Bedienkoordinaten, also die relative Bewegung 10 und die absolute Ortsinformation 9 selber, unterdrückt werden und nur die erzeugte kombinierte Geste an die darüber liegende Software-Applikation, welche die erzeugten Gesten zu bestimmten Zwecken verwendet, weitergeleitet wird.

### Bezugszeichenliste

- 1: Eingabeelement
- 2: Protokoll, relative Koordinaten beinhaltend
- 3: Display
- 4: Rechner
- 5: Keyboard
- 6: Smartphone / Tablet
- 7: absolute Bedienkoordinaten im Multitouchscreen
- 8: Protokoll relative und absolute Koordinaten beinhaltend
- 9: ermittelte absolute Bedienkoordinaten im Touchpad
- 10: relative Bedienkoordinaten im Touchpad
- 10': ermittelte relative Bedienkoordinaten im Display
- 11: begrenztes Eingabefeld im Touchpad
- 12: Touchpad
- 13: Multitouchscreen
- 14: Applikation zur Erzeugung von Gesten

## Patentansprüche

1. Verfahren zur Erzeugung von Gesten für die Bedienung einer Maschine durch einen Rechner (4), wobei ein Eingabemedium (1) ein flächenmäßig begrenztes Eingabefeld (11) aufweist, berührungssensitiv ist, und berührungssensitive Bewegungseingaben eines Anwenders in Eingangssignale umwandelt, wobei eine Applikation (14) die berührungssensitiven Bewegungseingaben des Anwenders sowohl als relative Bedienkoordinaten (10'), als auch als absolute Bedienkoordinaten (9) in zwei separaten Eingangskanälen interpretiert, wobei die Applikation die relativen Bedienkoordinaten (10') über den ersten Eingangskanal erhält und die absoluten Bedienkoordinaten (9) auf dem Eingabemedium (1) durch Randüberschreitung auf dem flächenmäßig begrenzten Eingabefeld (11) ermittelt, indem die Applikation (14) erkennt, dass eine relative Bewegung an einer bestimmten Stelle an einer Grenze des flächenmäßig begrenzten Eingabefeldes (11) diese Grenze überschreitet und anhand dieser bestimmten Stelle die absoluten Bedienkoordinaten (9) über den zweiten Eingangskanal erhält, die Koordinaten beider Eingangskanäle kombiniert und auswertet, damit die Eingangssignale des Eingabemediums (1) interpretiert und daraus Gesten für die Bedienung der Maschine erzeugt, wob
ei die durch
die Applikation (14) erzeugten Gesten an eine Software-Applikation zur Umsetzung und Darstellung der erkannten Gesten auf einem Display (3) weitergeleitet werden, **dadurch gekennzeichnet, dass** ein Filtermechanismus die Koordinaten aus einem von der Applikation (14) verwendeten Software-Protokoll (8) in Form der relativen (10') und absoluten Bedienkoordinaten (9) in den zwei separaten Eingangskanälen selbst blockiert, so dass nur die erzeugten Gesten an die Software-Applikation zur Darstellung auf dem Display (3) weitergeleitet werden.

2. Verfahren nach Anspruch 1,
wobei die relativen Bedienkoordinaten (10') auf dem Eingabemedium (1) durch berührungsindizierte Bewegungen auf dem flächenmäßig begrenzten Eingabefeld (11) ermittelt werden.

3. Verfahren nach einem der vorherigen Ansprüche,
wobei das Eingabemedium (1), welches die berührungssensitiven Bewegungseingaben des Anwenders in Eingangssignale umwandelt, ein relativ positionierendes Eingabemedium wie z.B. ein Touchpad (12) ist.

## Claims

1. Method for generating gestures for operating a machine by means of a computer (4),
wherein an input medium (1) includes a limited-area input field (11), is touch-sensitive, and converts a user's motion inputs into input signals, wherein an application (14) interprets the user's touch-sensitive motion inputs as both relative operating coordinates (10') and absolute operating coordinates (9) in two separate input channels, wherein the application receives the relative operating coordinates (10') via the first input channel and determines the absolute operating coordinates (9) on the input medium (1) on the basis of the border of the limited-area input field (11) being crossed in that the application (14) realizes that a relative motion at a specific location at a border of the limited-area input field (11) crosses the said border, and, based on the said specific location, obtains the absolute operating coordinates (9) via the second input channel, combines and evaluates the coordinates of both input channels to interpret the input signals of the input medium (1), and uses them to generate gestures for operating the machine, wherein the gestures generated by the application (14) are forwarded to a software application for implementing the recognized gestures and displaying them on a display (3),
**characterized**
**in that** a filter mechanism blocks the coordinates in the form of the relative (10') and absolute operating coordinates (9) from a software protocol (8) used by the application (14) in the two separate input channels themselves so that only the generated gestures are forwarded to the software application to be displayed on the display (3).

2. Method according to claim 1,
wherein the relative operating coordinates (10') are determined on the input medium (1) by touch-indicated motions on the limited-area input field (11).

3. Method according to any one of the preceding claims,
wherein the input medium (1) that converts the user's touch-sensitive motion inputs into input signals is an input medium for relative positioning such as a touchpad (12).

## Revendications

1. Méthode de génération de gestes pour la commande d'une machine par un calculateur (4), pour laquelle un média de saisie (1) présente un champ de saisie de surface limitée (11), est tactile, et convertit des entrées de mouvement tactiles d'un utilisateur en signaux d'entrée, pour laquelle une application (14) interprète les entrées de mouvement tactiles de l'utilisateur tant comme coordonnées de commande relatives (10') que comme coordonnées de commande absolues (9) dans deux canaux d'entrée distincts, pour laquelle l'application détecte les coordonnées de commande relatives (10') via le premier canal d'entrée et les coordonnées de commande absolues (9) sur le média de saisie (1) par dépassement du bord sur le champ d'entrée de surface limitée (11), l'application (14) détectant qu'un mouvement relatif en un point donné à une limite du champ d'entrée de surface limitée (11) dépasse ladite limite et reçoit, sur la base de ce point défini, les coordonnées de commande absolues (9) via le deuxième canal d'entrée, combine et évalue les coordonnées des deux canaux d'entrée, interprète ainsi les signaux d'entrées du média de saisie (1) et génère à partir de là des gestes pour la commande de la machine,
**pour laquelle les**
gestes générés par l'application (14) sont transmis à une application logicielle pour la mise en œuvre et la représentation des gestes détectés sur un visuel (3), **caractérisée en ce qu'**un mécanisme de filtre bloque automatiquement dans les deux canaux d'entrée séparés les coordonnées d'un protocole logiciel (8) utilisé par l'application (14) sous forme des coordonnées de commande relatives (10') et absolues (9), de sorte que seuls les gestes générés sont transmis à l'application logicielle pour la représentation sur le visuel (3).

2. Procédé selon la revendication 1,
pour lequel
les coordonnées de commande relatives (10') sur le média de saisie (1) sont déterminées par des mouvements d'origine tactile sur le champ de saisie de surface limitée (11).

3. Procédé selon l'une des revendications précédentes,
pour lequel
le média de saisie (1), qui convertit les entrées de mouvement tactiles de l'utilisateur en signaux d'entrée est un média de saisie à positionnement relatif, tel qu'un pavé tactile (12).
